# FASCICULE DE BREVET EUROPEEN

(11) **EP 2 679 484 B1**
(45) Date de publication et mention de la délivrance du brevet: **20.05.2015**
(21) Numéro de dépôt: 13173838.7
(22) Date de dépôt: 26.06.2013
(51) Int. Cl.: B64C 1/06

(54) **Structure primaire de fuselage pour aéronef comprenant des entretoises à rupture précoce pour accroître l'absorption d'énergie en cas de crash**
Primäre Rumpfstruktur für Luftfahrzeug, mit Stegaussteifungen welche auf ein frühzeitiges Versagen ausgelegt sind, um die Energieabsorption im Falle eines Flugzeug-Crashs zu erhöhen
Primary structure of aircraft fuselage comprising bracing elements designed for early rupture to increase energy absorption in case of a crash

(30) Priorité: 28.06.2012 FR 1256180
(43) Date de publication de la demande: 01.01.2014
(73) Titulaire: Airbus Operations (Société par actions simplifiée), 31060 Toulouse (FR)
(72) Inventeur: Milliere, Jérôme, 31490 Leguevin (FR); Faure, Jean-Marc, 32600 L'Isle Jourdain (FR); Froger, Edmond, 31770 Colomiers (FR); Rekert, Christian, 22763 Hamburg (DE); Monlouis-Bonnaire, Sandrine, 31880 La Salvetat-Saint-Gilles (FR)
(74) Mandataire: Augarde, Eric

(56) Documents cités:
- DE-A1-102009 020 891
- DE-A1-102010 014 638
- FR-A1- 2 936 218

## Description

### DOMAINE TECHNIQUE

La présente invention concerne d'une manière générale la dissipation de l'énergie d'impact résultant d'un crash d'un aéronef par une partie inférieure de la structure primaire du fuselage de l'aéronef, afin de protéger au mieux les occupants de cet aéronef.

Elle concerne ainsi une structure primaire de fuselage d'aéronef capable de dissiper l'énergie résultant d'un tel crash, notamment lorsque l'impact concerne une région inférieure du fuselage.

L'invention peut être avantageusement appliquée aux structures primaires de fuselages qui sont au moins partiellement réalisées en matériaux composites.

Elle est notamment destinée à être appliquée aux fuselages des avions, en particulier les avions de ligne moyens et gros porteurs.

### ÉTAT DE LA TECHNIQUE ANTÉRIEURE

La structure primaire du fuselage des avions de ligne est principalement composée de peaux renforcées par des cadres circonférentiels et des raidisseurs longitudinaux.

Cette structure primaire comporte en outre une structure de plancher inférieur raccordée par ses extrémités latérales aux cadres circonférentiels et supportée par un treillis d'entretoises, parfois dénommées bielles. Le plancher inférieur précité est couramment dénommé plancher cargo.

La structure primaire comporte en outre une structure de plancher de cabine des passagers raccordée par ses extrémités latérales aux cadres circonférentiels et également supportée par des entretoises. Le plancher de la cabine des passagers est dénommé plancher principal dans ce qui suit.

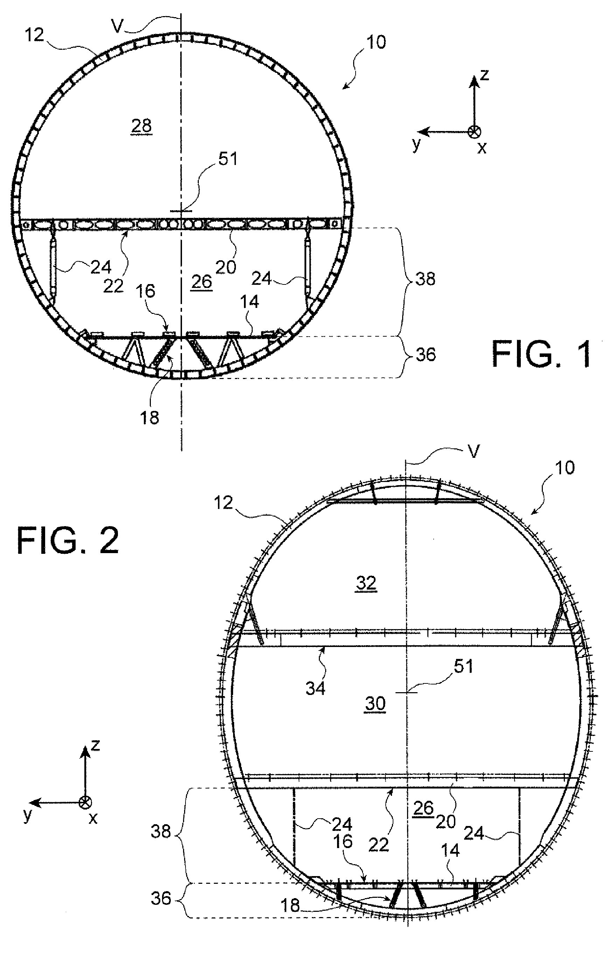

La figure 1 illustre un exemple typique d'une telle structure primaire de fuselage 10 vue en section transversale, et montre en particulier un cadre circonférentiel 12, une traverse 14 de la structure de plancher inférieur 16, un treillis d'entretoises 18 ayant chacune une extrémité inférieure fixée au cadre circonférentiel 12 et une extrémité supérieure fixée à la traverse 14 de la structure de plancher inférieur 16 de manière à supporter celle-ci, ainsi qu'une traverse 20 de la structure de plancher principal 22, et deux entretoises 24 ayant chacune une extrémité inférieure fixée au cadre circonférentiel 12 et une extrémité supérieure fixée à la traverse 20 de la structure de plancher principal 22 de manière à supporter cette dernière. La structure de plancher inférieur 16 permet de supporter le plancher de la soute 26 de l'avion tandis que la structure de plancher principal 22 permet de supporter le plancher de la cabine des passagers 28.

La figure 2 illustre un deuxième exemple typique d'une structure primaire de fuselage 10 vue en section transversale, qui diffère de la structure primaire de la figure 1 du fait que la cabine des passagers comporte un étage ou pont inférieur 30 et un étage ou pont supérieur 32, de sorte que la structure primaire comporte en outre une structure de plancher supérieur 34 destinée à supporter le plancher du pont supérieur.

L'état de l'art est également illustré par les documents FR-A1-2 936 218 et DE-A1-10 2009 020 891.

Dans certains cas de crash d'un avion intervenant dans des conditions de vitesse réduites, notamment en ce qui concerne la composante verticale de cette vitesse, il est souhaitable que l'énergie d'impact associée à cette composante verticale soit dissipée de manière optimale par une partie inférieure de la structure primaire, définie en-dessous de la structure de plancher principal 22, de sorte que les répercussions du choc vertical subies par les passagers en zone cabine restent en dessous des limites réglementaires.

A cet effet, il est souhaitable, pendant une première phase immédiatement consécutive à un impact vertical, qu'une première portion 36 de la structure primaire, définie sous le plancher inférieur ou plancher cargo, s'écrase en transmettant un faible niveau d'efforts à une seconde portion 38 de cette structure primaire, définie au-dessus du plancher inférieur. Cette première phase, qui dure typiquement de l'ordre de 150 millisecondes, a pour but de permettre une absorption d'énergie maximale par la première portion 36 de la structure primaire. Cette première phase est normalement suivie d'une seconde phase au cours de laquelle la seconde portion 38 de la structure se déforme en absorbant le surplus d'énergie que la première portion n'a pas pu absorber.

Il est donc souhaitable de limiter le niveau d'efforts transmis à la seconde portion 38 de la structure primaire par la première portion 36 de celle-ci lors d'un crash, dans le but de garantir que la seconde portion 38 n'entame pas sa déformation prématurément, ce qui limiterait l'écrasement de la première portion 36 et donc la quantité d'énergie globalement absorbée par l'ensemble de la partie inférieure de la structure primaire. Une limitation du niveau des efforts transmis à la seconde portion 38 de la structure primaire pendant la première phase précitée est en outre souhaitable pour réduire la capacité de tenue à ses efforts requise pour ladite seconde portion 38, et limiter ainsi la masse des éléments constituant cette seconde portion tels que les entretoises 24 supportant la structure de plancher principal ainsi que les cadres circonférentiels 12.

Toutefois, une grande partie des efforts appliqués à la première portion 36 de la structure primaire lors d'un crash sont transmis à la structure de plancher inférieur 16 par les entretoises 18 supportant cette dernière. Ces efforts transitent par les extrémités latérales de la structure de plancher inférieur et aboutissent ainsi directement dans des régions des cadres circonférentiels 12 qui sont situées à la base de la seconde portion 38 de la structure primaire, provoquant une déformation prématurée de cette seconde portion.

Une réduction de la rigidité des entretoises 18 supportant la structure de plancher inférieur 16 permettrait de réduire le niveau des efforts transmis à la seconde portion 38 de la structure primaire en cas de crash, mais cette solution n'est pas satisfaisante car elle se traduit nécessairement par une réduction de la charge admissible sur la plancher inférieur en fonctionnement normal de l'avion.

Une autre solution qui a été proposée par la demanderesse est décrite dans la demande internationale de brevet WO 2009/101372 A1. Dans ce document, une structure de plancher est supportée par des entretoises prenant la forme de poutres de compression en matériau composite orientées selon la direction verticale et fixées chacune à un cadre circonférentiel. Ces entretoises comportent chacune à leur extrémité supérieure un gousset apte à découper l'entretoise sous l'effet d'un effort de compression de fort niveau tel que celui résultant d'un crash.

Toutefois, cette solution requiert que chaque entretoise soit capable de résister aux moyens de découpe du gousset correspondant lorsque l'entretoise est soumise à un effort de compression induit par le chargement du plancher, en fonctionnement normal, de sorte que la découpe de l'entretoise n'intervienne qu'en cas de crash.

Cette solution nécessite ainsi un surdimensionnement des entretoises, qui conduit à un accroissement non souhaitable de la masse globale de la structure primaire de fuselage.

En outre, comme expliqué ci-dessus, l'énergie d'impact résultant d'un crash peut être en grande partie absorbée par la partie inférieure de la structure primaire du fuselage des avions.

Dans les fuselages ayant une structure primaire métallique, par exemple réalisée en aluminium, l'absorption de l'énergie d'impact résulte d'une déformation plastique des éléments métalliques constituant la structure primaire. Les éléments métalliques qui se déforment sont notamment la peau, les raidisseurs longitudinaux, les entretoises 18 supportant la structure de plancher inférieur 16, les entretoises 24 supportant la structure de plancher principal 22, et une portion inférieure de chaque cadre circonférentiel 12 définie en-dessous de la structure de plancher principal.

Cependant, l'utilisation de matériaux composites dans la constitution des avions se généralise du fait que ces matériaux permettent de concilier une grande rigidité et une faible masse, offrant à l'avion utilisant ces matériaux composites un surplus de performance par rapport à un avion réalisé en matériaux métalliques.

Il a ainsi été proposé d'utiliser de tels matériaux composites pour constituer les principaux éléments des structures primaires de fuselage, notamment les cadres circonférentiels, les peaux et les raidisseurs longitudinaux.

Or, l'utilisation de ces matériaux composites ne permet pas à ces éléments structurels de se déformer plastiquement comme le font les éléments réalisés en métal. Au contraire, lorsqu'ils sont soumis à un impact important, ces éléments subissent en général une ruine explosive, se traduisant par un niveau d'énergie absorbée relativement faible.

L'utilisation de structures primaires de fuselage de type connu dont les principaux éléments sont en matériaux composites réduit ainsi considérablement la quantité d'énergie pouvant être absorbée par la structure lors d'un crash, notamment dans le cas d'un impact localisé au niveau du ventre du fuselage, à la verticale de l'axe longitudinal central de ce fuselage, ce qui correspond au scenario généralement utilisé par les autorités de certification.

### EXPOSÉ DE L'INVENTION

L'invention a notamment pour but d'apporter une solution simple, économique et efficace à tout ou partie de ces problèmes, permettant d'éviter au moins en partie les inconvénients précités.

Elle a ainsi pour objet une structure primaire de fuselage pour aéronef présentant une capacité optimale d'absorption de l'énergie résultant d'un impact de type crash vertical.

Elle a également pour objet une structure primaire de fuselage pour aéronef qui soit de faible masse.

L'invention propose à cet effet une structure primaire de fuselage pour aéronef, comprenant :
- une pluralité de cadres circonférentiels ;
- une première structure de plancher présentant des extrémités latérales opposées raccordées aux cadres circonférentiels ; et
- au moins une entretoise pour supporter la première structure de plancher, ladite entretoise comprenant une extrémité inférieure fixée sur un cadre circonférentiel de ladite pluralité de cadres circonférentiels ainsi qu'une extrémité supérieure opposée fixée sur la première structure de plancher.

Selon l'invention, la structure primaire de fuselage comprend au moins un élément initiateur de ruine comprenant des premiers moyens de fixation par lesquels l'élément initiateur de ruine est fixé sur un cadre circonférentiel de ladite pluralité de cadres circonférentiels, à distance de l'extrémité inférieure de ladite entretoise, ainsi que des seconds moyens de fixation par lesquels l'élément initiateur de ruine est fixé sur ladite entretoise, à distance des extrémités de celle-ci de sorte que l'élément initiateur de ruine applique à ladite entretoise un effort parasite, c'est-à-dire latéral, sous l'effet d'un effort d'impact orienté sensiblement selon la direction radiale et vers l'intérieur par rapport à un axe longitudinal de la structure primaire de fuselage, de manière à favoriser une ruine précoce par flambage de l'entretoise soumise à un effort de compression résultant dudit effort d'impact.

Du fait de sa fixation sur l'entretoise à distance des extrémités de celle-ci et sur un cadre circonférentiel, à distance de l'extrémité inférieure de l'entretoise, l'élément initiateur de ruine permet d'appliquer à l'entretoise un effort latéral sous l'effet d'un effort d'impact orienté sensiblement selon la direction radiale et vers l'intérieur par rapport à un axe longitudinal de la structure primaire de fuselage. Un tel effort parasite est orienté latéralement, c'est-à-dire selon un angle non nul, et préférentiellement supérieur à 30 degrés, par rapport à une direction longitudinale de l'entretoise, et permet ainsi de favoriser une ruine précoce par flambage de l'entretoise soumise à un effort de compression.

La ruine précoce de l'entretoise permet de limiter le niveau d'efforts transmis par celle-ci à la première structure de plancher précitée, et plus généralement à une partie de la structure primaire disposée au-dessus de cette première structure de plancher, correspondant à la seconde portion de la structure primaire définie ci-dessus, c'est-à-dire à la portion devant s'écraser dans une deuxième phase du scenario d'écrasement de la structure primaire suite à un crash.

Cela permet de réduire la capacité de tenue structurale requise en ce qui concerne la seconde portion précitée de la structure primaire, et donc de réduire la masse de cette dernière.

Cela permet en outre de retarder l'écrasement de cette seconde portion de la structure primaire, et donc de maximiser l'absorption d'énergie produite par l'écrasement de la première portion de la structure primaire, définie au-dessous de la première structure de plancher précitée.

De plus, l'élément initiateur de ruine n'applique pas d'effort parasite à l'entretoise en fonctionnement normal, de sorte qu'il n'est pas nécessaire de prendre en compte cet effort parasite dans le dimensionnement de l'entretoise.

L'invention permet ainsi un gain de masse par rapport à la solution connue décrite ci-dessus du document WO 2009/101372 A1, dans laquelle la ruine des entretoises est obtenue par un découpage de l'entretoise sous l'effet d'un effort de compression longitudinal appliqué à celle-ci.

Il est à noter que l'axe longitudinal de la structure primaire de fuselage est ici défini comme étant l'axe longitudinal s'étendant à égale distance d'extrémités inférieure et supérieure de la structure primaire de fuselage, et à égale distance d'extrémités latérales opposées de cette structure primaire. Dans le cas particulier d'une structure primaire de fuselage présentant une symétrie de révolution, l'axe longitudinal considéré est simplement l'axe de révolution de la structure primaire.

Ladite entretoise et ledit élément initiateur de ruine associé sont avantageusement, mais non nécessairement, fixés sur le même cadre circonférentiel.

De plus, ladite entretoise est de préférence fixée sur une traverse de la première structure de plancher précitée.

Cette traverse est avantageusement réalisée en un métal, par exemple en aluminium.

De plus, ladite entretoise est de préférence inclinée par rapport à la direction verticale de sorte que la deuxième extrémité de celle-ci est plus proche d'un plan vertical passant par un axe longitudinal de la structure primaire que ne l'est l'extrémité inférieure de l'entretoise.

D'une manière générale, il est à noter que le plan vertical précité forme en général un plan médian de symétrie de la structure primaire de fuselage.

L'entretoise est de préférence réalisée en un métal, tel qu'un alliage de titane.

L'élément initiateur de ruine associé est avantageusement réalisé en matériau composite, comprenant par exemple des fibres de carbone noyées dans une résine époxy durcie.

Lesdits seconds moyens de fixation dudit élément initiateur de ruine sont de préférence écartés de chaque extrémité de ladite entretoise d'une distance supérieure ou égale à 25% d'une longueur totale de cette entretoise.

Cela permet d'éloigner la zone d'application de l'effort parasite précité par rapport aux extrémités de l'entretoise, de manière à maximiser l'effet de cet effort parasite et favoriser au mieux la ruine de l'entretoise par flambement.

Par ailleurs, ledit élément initiateur de ruine comprend de préférence une poutre de compression présentant deux extrémités opposées au niveau desquelles sont respectivement agencés lesdits premiers et seconds moyens de fixation.

Une telle configuration de l'élément initiateur de ruine permet une transmission efficace de l'effort parasite précité.

De plus, ladite poutre de compression s'étend avantageusement selon une direction faisant un angle compris entre 45 degrés et 145 degrés avec la direction longitudinale de ladite entretoise.

Cela permet de maximiser l'effet de l'effort parasite précité sur l'entretoise.

De plus, cela permet de minimiser l'effort de compression appliqué à l'élément initiateur de ruine en fonctionnement normal de l'aéronef équipé de ladite structure primaire de fuselage, sous l'effet du chargement de la première structure de plancher.

En outre, ladite entretoise et ladite poutre de compression formant l'élément initiateur de ruine s'étendent de préférence orthogonalement à une direction longitudinale de ladite structure primaire.

En variante, l'une et/ou l'autre de l'entretoise et de la poutre de compression précitée peuvent s'étendre selon une direction non orthogonale à la direction longitudinale de ladite structure primaire, sans sortir du cadre de l'invention.

D'une manière générale, ladite pluralité de cadres circonférentiels comprend de préférence au moins un cadre circonférentiel, ci-après dénommé cadre circonférentiel à dissipation d'énergie, comportant au moins un secteur angulaire réalisé en un matériau métallique, s'étendant circonférentiellement de part et d'autre d'une ligne longitudinale virtuelle traversant l'extrémité inférieure de ladite entretoise.

La nature métallique du secteur angulaire précité de ce cadre circonférentiel lui confère une aptitude à se déformer plastiquement et donc à absorber une part importante de l'énergie d'impact résultant d'un crash.

Le matériau métallique constituant le secteur angulaire précité du cadre circonférentiel est de préférence un alliage de titane.

De plus, ledit secteur angulaire en matériau métallique s'étend avantageusement de part et d'autre du plan vertical passant par l'axe longitudinal de la structure primaire, de préférence symétriquement par rapport audit plan vertical.

Cela permet de favoriser une absorption d'énergie homogène de part et d'autre du plan vertical précité, qui est le plan selon lequel s'exerce l'effort d'impact orienté vers le haut dans le cas d'un scenario de crash standard du type décrit ci-dessus.

Dans un mode de réalisation préféré de l'invention, ladite première structure de plancher est une structure de plancher inférieur, et ladite structure primaire comprend en outre :
- une structure de plancher principal disposée au-dessus de ladite structure de plancher inférieur et présentant des extrémités latérales opposées raccordées à ladite pluralité de cadres circonférentiels, et
- au moins deux entretoises présentant des extrémités inférieures respectives agencées de part et d'autre dudit plan vertical et fixées sur ledit secteur angulaire en matériau métallique du cadre circonférentiel à dissipation d'énergie précité, ainsi que des extrémités supérieures respectives opposées fixées sur ladite structure de plancher principal, de manière à supporter cette dernière.

Le secteur angulaire métallique, la structure de plancher principal, et les deux entretoises qui la soutiennent, forment ainsi un chemin d'efforts fermé qui est intégralement réalisé en métal et donc intégralement déformable plastiquement.

Ce chemin d'efforts ne présente ainsi pas de zone fusible de nature à se rompre prématurément, ce qui permet de maximiser l'aptitude de la structure primaire de fuselage à absorber l'énergie d'impact consécutive à un crash.

La structure de plancher principal peut par exemple former la structure d'un plancher de cabine des passagers.

Les extrémités supérieures respectives des entretoises supportant ladite structure de plancher principal sont de préférence fixées sur une traverse de cette structure de plancher.

Les extrémités inférieures respectives des entretoises supportant ladite structure de plancher principal sont de préférence agencées latéralement au-delà de ladite structure de plancher inférieur. Ces extrémités inférieures des entretoises peuvent ainsi être agencées respectivement à proximité de deux extrémités circonférentielles opposées du secteur angulaire en matériau métallique du cadre circonférentiel à dissipation d'énergie.

Les entretoises supportant ladite structure de plancher principal s'étendent de préférence selon la direction verticale, d'une manière connue en soi.

Par ailleurs, dans le mode de réalisation préféré de l'invention, ledit cadre circonférentiel à dissipation d'énergie comprend en outre au moins un secteur angulaire réalisé en un matériau composite comprenant des fibres de renfort noyées dans une matrice de résine durcie.

Dans le mode de réalisation préféré de l'invention, le cadre circonférentiel à dissipation d'énergie comprend un seul secteur angulaire en matériau composite, présentant deux extrémités circonférentielles jointes à deux extrémités circonférentielles du secteur angulaire en matériau métallique. Ces deux secteurs angulaires forment ainsi l'intégralité du cadre circonférentiel à dissipation d'énergie.

D'une manière générale, le cadre circonférentiel à dissipation d'énergie peut avantageusement comprendre une pluralité de secteurs angulaires montés bout-à-bout circonférentiellement, dont l'un au moins est réalisé en un matériau métallique et dont au moins un autre est réalisé en matériau composite.

En variante, le cadre circonférentiel à dissipation d'énergie peut être intégralement réalisé en métal, sans sortir du cadre de la présente invention.

Dans le mode de réalisation préféré de l'invention, ladite pluralité de cadres circonférentiels comprend en outre au moins un cadre circonférentiel intégralement réalisé en matériau composite, ci-après dénommé cadre circonférentiel composite. Il faut comprendre sous cette appellation tout cadre en matériau composite dépourvu de secteur angulaire en matériau métallique du type décrit ci-dessus.

La pluralité de cadres circonférentiels est ainsi de préférence composée de cadres circonférentiels à dissipation d'énergie et de cadres circonférentiels composites qui peuvent être disposés suivant différents schémas d'alternance, comprenant par exemple un cadre circonférentiel sur deux du type composite, ou un cadre circonférentiel sur trois du type composite, ou encore comprenant des paires de cadres circonférentiels à dissipation d'énergie consécutifs alternées avec des paires de cadres circonférentiels composites consécutifs.

D'une manière générale, la structure primaire de fuselage comprend de préférence une pluralité d'entretoises présentant une extrémité inférieure fixée sur un cadre circonférentiel de ladite pluralité de cadres circonférentiels ainsi qu'une extrémité supérieure opposée fixée sur ladite première structure de plancher, de manière à supporter cette dernière.

Ces entretoises sont de préférence configurées de manière symétrique par rapport au plan vertical précité passant par l'axe de la structure primaire.

En particulier, ladite pluralité d'entretoises comprend de préférence au moins une paire d'entretoises, ci-après dénommées entretoises principales, dont les extrémités inférieures respectives sont fixées sur un même cadre circonférentiel et dont les extrémités supérieures respectives sont fixées sur ladite première structure de plancher, lesdites entretoises principales étant agencées symétriquement de part et d'autre du plan vertical passant par l'axe longitudinal de la structure primaire, ladite structure primaire comprenant au moins deux éléments initiateurs de ruine dont lesdits premiers moyens de fixation sont fixés sur une portion dudit cadre circonférentiel s'étendant entre lesdites extrémités inférieures desdites entretoises principales, et dont lesdits seconds moyens de fixation sont respectivement fixés auxdites entretoises principales, à distance des extrémités de ces dernières.

Les éléments initiateurs de ruine associés aux deux entretoises principales peuvent ainsi être fixés chacun à une portion du cadre circonférentiel qui est située à proximité du plan vertical précité.

Cela permet à ces éléments initiateurs de ruine d'être fixés au plus près de la partie du cadre circonférentiel à laquelle est appliqué l'effort d'impact en cas de crash standard du type décrit ci-dessus.

A cet effet, l'écartement angulaire entre ledit plan vertical et lesdits premiers moyens de fixation de chacun des deux éléments initiateurs de ruine respectivement associés auxdites entretoises principales, mesuré autour de l'axe longitudinal de la structure primaire, est de préférence inférieur ou égal à 10 degrés, et encore plus préférentiellement inférieur ou égal à 5 degrés.

De plus, les deux éléments initiateurs de ruine respectivement associés aux deux entretoises principales s'étendent de préférence symétriquement par rapport audit plan vertical.

Par ailleurs, dans le mode de réalisation préféré de l'invention, ladite pluralité d'entretoises supportant ladite première structure de plancher comprend en outre une paire d'entretoises secondaires agencées latéralement de part et d'autre de l'ensemble formé par ladite paire d'entretoises principales et fixées sur le même cadre circonférentiel que ces dernières.

L'invention concerne également un tronçon de fuselage pour aéronef comprenant une structure primaire de fuselage du type décrit ci-dessus.

L'invention concerne encore un aéronef, tel qu'un avion de ligne de type moyen ou gros porteur, comprenant au moins un tronçon de fuselage et/ou une structure primaire de fuselage du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- les figures 1 et 2, déjà décrites, sont des vues schématiques en coupe transversale de structures primaires de fuselages d'avions de types connus ;
- la figure 3 est une vue schématique partielle en perspective d'une partie inférieure d'une structure primaire de fuselage d'avion selon un mode de réalisation préféré de l'invention ;
- la figure 4 est une vue schématique partielle en coupe transversale d'une partie inférieure de la structure primaire de fuselage de la figure 3 ;
- la figure 5 est une vue à plus grande échelle du détail V de la figure 4 ;
- la figure 6 est une vue à plus grande échelle du détail VI de la figure 5 ;
- la figure 7 est une vue schématique en perspective d'une extrémité inférieure d'une entretoise appartenant à la partie inférieure de la structure primaire de fuselage visible sur la figure 4 ;
- la figure 8 est une vue schématique en perspective d'un élément initiateur de ruine appartenant à la partie inférieure de la structure primaire de fuselage visible sur la figure 4 ;
- les figures 9 et 10 sont des vues schématiques, respectivement de dessus et de côté, de l'élément initiateur de ruine de la figure 8 ;
- la figure 11 est une vue schématique en coupe transversale de la structure primaire de fuselage de la figure 3, illustrant un cadre circonférentiel comprenant une portion inférieure en matériau métallique et une portion supérieure en matériau composite ;
- la figure 12 est une vue schématique en coupe transversale de la structure primaire de fuselage de la figure 3, illustrant un cadre circonférentiel intégralement réalisé en matériau composite.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

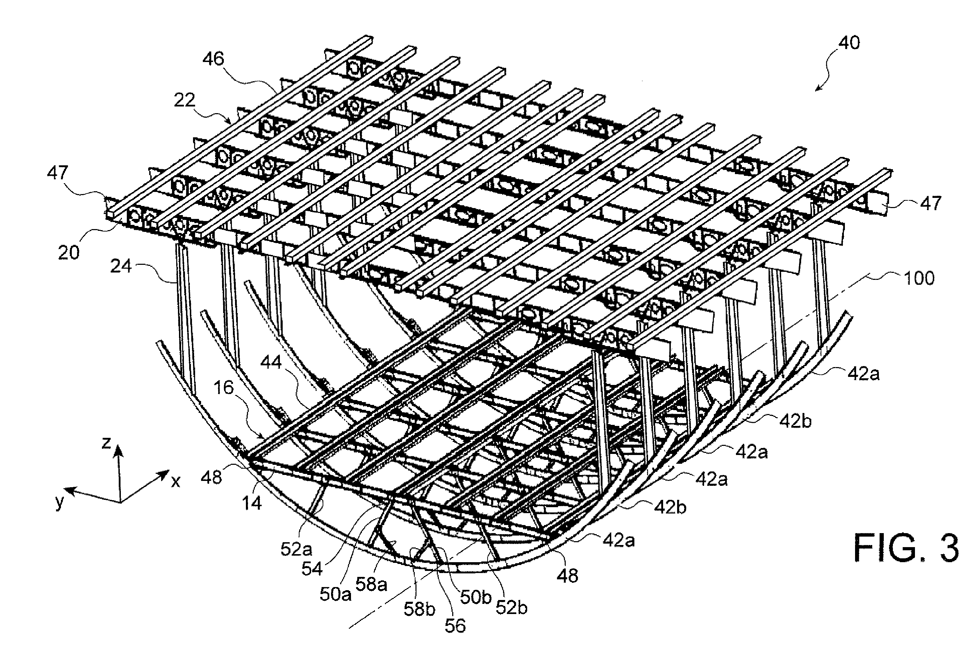

La figure 3 illustre une partie inférieure d'une structure primaire de fuselage 40 d'un avion selon un mode de réalisation préféré de l'invention.

Dans l'ensemble de la présente description, on appelle X la direction longitudinale de la structure primaire de fuselage 40 qui est également assimilable à la direction longitudinale de l'avion comportant cette structure primaire de fuselage. D'autre part, on appelle Y la direction orientée transversalement par rapport à la structure primaire de fuselage 40 et également assimilable à la direction transversale de l'avion, et Z la direction verticale ou de la hauteur, ces trois directions X, Y et Z étant orthogonales entre-elles.

Dans l'exemple décrit, le fuselage de l'avion est formé de plusieurs tronçons. La figure 3 illustre ainsi en partie la structure primaire d'un tronçon de ce fuselage.

Cette structure primaire 40 comporte une pluralité de cadres circonférentiels 42a, 42b dont seule une partie inférieure est représentée sur la figure 3, ainsi qu'une structure de plancher inférieur 16 et une structure de plancher principal 22.

D'une manière connue en soi, la structure de plancher inférieur 16 comprend un entrecroisement de traverses 14 et de rails 44 longitudinaux qui sont par exemple réalisés en aluminium, et la structure de plancher principal 22 comprend un entrecroisement de traverses 20 et de rails 46 longitudinaux qui sont également réalisés en aluminium.

Chaque traverse 20 de la structure de plancher principal 22 est raccordée par ses extrémités latérales 47 à un cadre circonférentiel 42a, 42b et est soutenue par deux entretoises 24 qui sont par exemple réalisées en aluminium.

Chaque traverse 14 de la structure de plancher inférieur 16 est raccordée par ses extrémités latérales 48 à un cadre circonférentiel 42a, 42b.

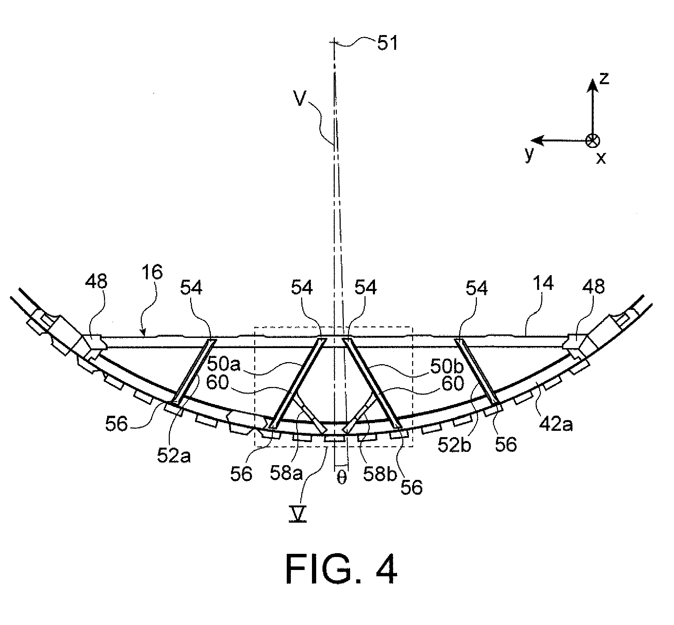

Comme le montre plus clairement la figure 4, chaque traverse 14 de la structure de plancher inférieur 16 est en outre soutenue par quatre entretoises, parfois dénommées bielles, reliées au même cadre circonférentiel 42a que les extrémités latérales 48 de la traverse 14. Ces entretoises sont réalisées en métal, par exemple en un alliage de titane.

Ces quatre entretoises se répartissent en une paire d'entretoises principales 50a et 50b agencées relativement à proximité du plan vertical V passant par l'axe 51 de la structure primaire de fuselage 40, et mutuellement symétriques par rapport à ce plan vertical V, ainsi que deux entretoises secondaires 52a et 52b disposées latéralement de part et d'autre de la paire d'entretoises principales 50a, 50b, également d'une manière symétrique par rapport au plan vertical V.

Chacune de ces quatre entretoises comprend une extrémité supérieure 54 fixée sur la traverse 14 précitée, et une extrémité inférieure 56 fixée sur le cadre circonférentiel 42a.

De plus, chacune de ces entretoises s'étend perpendiculairement à la direction longitudinale X et est inclinée par rapport au plan vertical V de sorte que l'extrémité supérieure 54 de l'entretoise soit plus proche de ce plan vertical V que son extrémité inférieure 56.

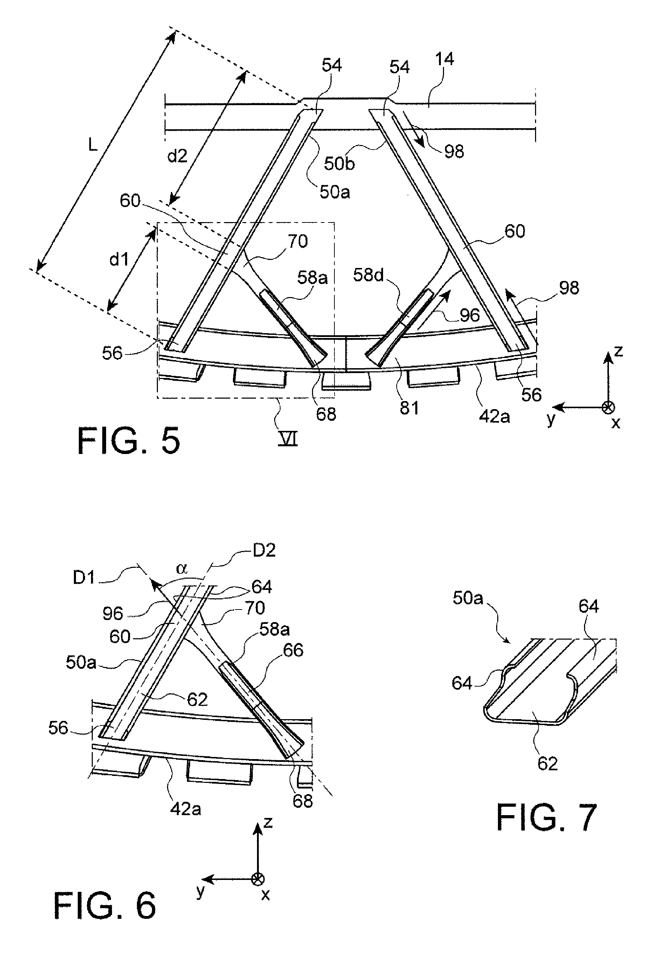

D'une manière propre à l'invention, chaque entretoise principale 50a, 50b est reliée à un élément initiateur de ruine 58a, 58b correspondant, qui est essentiellement formé d'une poutre de compression ayant une extrémité inférieure 68 fixée sur le même cadre circonférentiel 42a que l'entretoise principale, et une extrémité supérieure 70 fixée sur l'entretoise principale, au niveau d'une zone 60 de l'entretoise écartée des extrémités 54 et 56 de celle-ci (figures 4 et 5). Cette poutre de compression est de préférence réalisée en un matériau composite, par exemple à base de fibres de carbone noyées dans une résine époxy durcie.

Comme l'illustrent les figures 6 et 7, chacune des quatre entretoises 50a, 50b, 52a, 52b prend la forme d'une poutre de compression profilée comportant une âme 62 plane raccordée à deux bords tombés latéraux 64 de rigidification, de sorte que la poutre précitée présente une section transversale sensiblement en forme de C. Dans l'exemple décrit, les bords latéraux 64 de la poutre sont effilés au niveau de l'extrémité inférieure 56 de l'entretoise (figure 7).

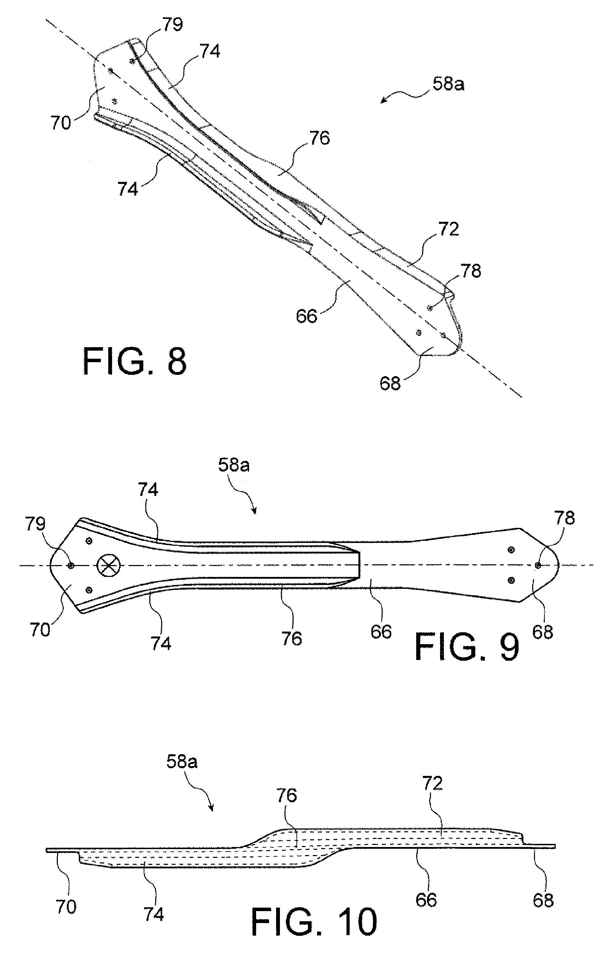

Les figures 8 à 10 illustrent plus en détail la poutre de compression formant l'un des éléments initiateurs de ruine 58a. Cette poutre comprend une âme 66 plane présentant deux extrémités opposées évasées formant respectivement l'extrémité inférieure 68 et l'extrémité supérieure 70 de l'élément initiateur de ruine. Ces deux extrémités 68 et 70 présentent des rebords latéraux de rigidification respectifs 72 et 74 qui font saillie respectivement de part et d'autre de l'âme 66, orthogonalement à celle-ci, et qui se raccordent l'un à l'autre au niveau d'une zone médiane 76 de l'élément initiateur de ruine 58a.

Chacune des extrémités évasées 68, 70 de l'élément initiateur de ruine 58a comporte des orifices traversants 78 et 79 (figures 8 et 9), qui sont par exemple au nombre de trois, pour le passage de vis ou de rivets de fixation (ces vis ou rivets n'étant pas représentés sur les figures). Les orifices 78 et 79 précités font ainsi partie respectivement de premiers moyens de fixation et de seconds moyens de fixation de l'élément initiateur de ruine 58a, selon la terminologie de la présente invention.

Dans l'exemple illustré, l'élément initiateur de ruine 58a est appliqué sur l'entretoise 50a correspondante par une première face de l'âme 66 de cet élément initiateur de ruine 58a, opposée aux rebords latéraux 74 correspondants, et cet élément initiateur de ruine 58a est appliqué sur le cadre circonférentiel 42a correspondant par une seconde face, opposée aux rebords latéraux 72 correspondants et à la première face précitée.

Comme l'illustre la figure 5, les éléments initiateurs de ruine 58a, 58b respectivement associés aux deux entretoises principales 50a, 50b s'étendent entre ces dernières. Plus précisément, l'extrémité inférieure 68 de chacun de ces éléments initiateurs de ruine est fixée sur une portion 81 du cadre circonférentiel 42a qui s'étend entre les extrémités inférieures respectives 56 des deux entretoises principales 50a, 50b.

Toujours en référence à la figure 5, il apparaît que la zone 60 de chaque entretoise 50a, 50b, à laquelle est raccordée l'extrémité supérieure 70 de l'élément initiateur de ruine 58a, 58b associé, est écartée de l'extrémité inférieure 56 de l'entretoise 50a, 50b d'une distance *d1* environ égale à 35% de la longueur *L* de l'entretoise, et est écartée de l'extrémité supérieure 54 de cette entretoise d'une distance *d2* environ égale à 55% de la longueur *L* de l'entretoise. Plus généralement, les distances *d1* et *d2* sont de préférence supérieure à 25% de la longueur *L* de l'entretoise 50a, 50b, comme expliqué ci-dessus.

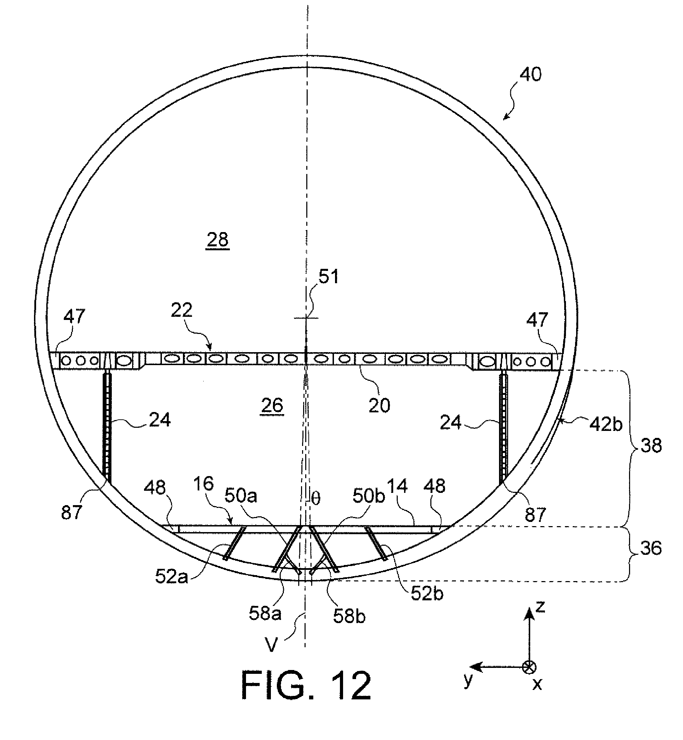

L'extrémité inférieure 68 de chaque élément initiateur de ruine 58a, 58b est quant-à elle rapprochée du plan vertical V de sorte que les orifices 78 constituant les premiers moyens de fixation précités soient compris dans un angle 9, mesuré par rapport au plan vertical V depuis l'axe longitudinal 51 de la structure primaire 40, qui est égal à 5 degrés environ (figures 4 et 12).

De plus, comme le montre la figure 6, la poutre de compression formant l'élément initiateur de ruine 58a s'étend selon une direction D1 faisant avec une direction longitudinale D2 de l'entretoise 50a correspondante un angle α égal à 60 degrés environ. Il en est bien entendu de même en ce qui concerne l'autre entretoise principale 50b et son élément initiateur de ruine associé 58b. Plus généralement, l'angle α peut être avantageusement compris dans la fourchette allant de 45 degrés à 135 degrés.

Comme l'illustre la figure 3, la structure primaire de fuselage 40 comporte des cadres circonférentiels 42a d'un premier type et des cadres circonférentiels 42b d'un second type.

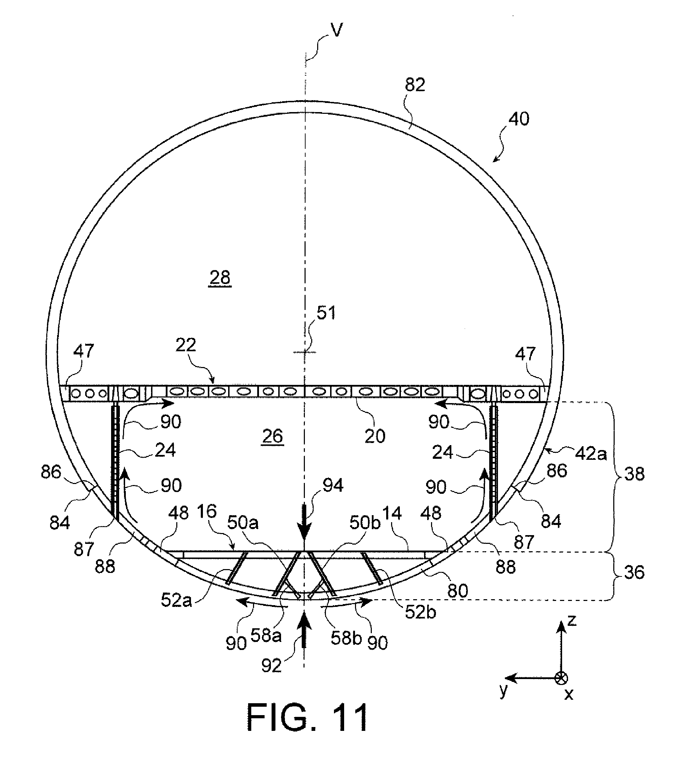

La figure 11 illustre un cadre circonférentiel 42a du premier type, qui se caractérise par le fait qu'il comprend un secteur angulaire 80 réalisé en métal, par exemple en un alliage de titane, et un secteur angulaire 82 réalisé en un matériau composite, par exemple à base de fibres de carbone noyées dans une résine durcie.

Le secteur angulaire métallique 80 forme une portion inférieure du cadre circonférentiel 42a, et est centré par rapport au plan vertical V passant par l'axe 51 de la structure primaire 40. Le secteur angulaire composite 82 est disposé au dessus du secteur angulaire métallique 80 et présente des extrémités circonférentielles 84 jointes aux extrémités circonférentielles 86 du secteur angulaire métallique 80.

Ainsi, les quatre entretoises 50a, 50b, 52a, 52b qui supportent chaque traverse 14 de la structure de plancher inférieur 16 sont fixées sur le secteur angulaire métallique 80 du cadre circonférentiel 42a correspondant.

Il est à noter que le secteur angulaire métallique 80 s'étend circonférentiellement au-delà des extrémités latérales 48 des traverses 14 de la structure de plancher inférieur 16.

De plus, les deux entretoises 24 qui supportent chaque traverse 20 de la structure de plancher principal 22 sont également fixées sur le secteur angulaire métallique 80 du cadre circonférentiel 42a correspondant. Plus précisément, ces deux entretoises 24 présentent des extrémités inférieures 87 fixées sur des portions 88 du secteur angulaire 80 qui s'étendent chacune entre une extrémité latérale 48 de la traverse 14 correspondante de la structure de plancher inférieur 16 et l'extrémité correspondante 86 de ce secteur angulaire 80.

Le secteur angulaire métallique 80 de chaque cadre circonférentiel 42a à absorption d'énergie forme ainsi, avec la traverse 20 correspondante de la structure de plancher principal 22 et avec les entretoises 24 supportant celle-ci, un chemin fermé de circulation des efforts 90 induits par un impact 92 orienté vers le haut appliqué sous la structure primaire 40 à la verticale de l'axe 51 de cette dernière. Un tel impact 92 correspond à un cas de crash standard tel que le considèrent les autorités de certification. Un avantage de l'invention résulte du fait que les éléments constituant le chemin d'efforts précité sont tous aptes à se déformer plastiquement et donc à absorber une part importante de l'énergie d'impact résultant d'un tel crash. Le chemin d'efforts précité ne présente ainsi pas de zone fusible susceptible de se rompre prématurément en cas de crash.

La figure 12 illustre un cadre circonférentiel 42b du second type, qui se caractérise par le fait qu'il est intégralement réalisé en un matériau composite, par exemple à base de fibres de carbone noyées dans une résine durcie.

Comme l'illustre la figure 3, la structure primaire 40 présente une disposition en alternance de deux cadres circonférentiels 42a du premier type et d'un cadre circonférentiel 42b du second type. La structure primaire 40 comporte ainsi 2/3 cadres circonférentiels 42a du premier type et 1/3 cadres circonférentiels 42b du second type.

En fonctionnement normal, la structure de plancher inférieur 16 est globalement soumise à un effort normal 94 (figure 11) induit par la charge portée par le plancher inférieur. Cet effort normal 94 orienté vers le bas est repris par les entretoises principales 50a, 50b et secondaires 52a, 52b et transmis aux cadres circonférentiels 42a, 42b. Compte tenu de l'angle α (figure 6) d'inclinaison relative des éléments initiateurs de ruine 58a, 58b par rapport aux entretoises principales 50a, 50b, l'effort normal 94 sollicite peu les éléments initiateurs de ruine 58a et 58b.

En cas de crash du type décrit ci-dessus, les extrémités inférieures 68 (figure 5) des éléments initiateurs de ruine 58a et 58b sont directement soumises aux efforts d'impact 90 orientés vers le haut de sorte que ces éléments initiateurs de ruine transmettent chacun à l'entretoise principale correspondante 50a, 50b un effort parasite 96 (figures 5 et 6) orienté selon la direction D1 de la poutre de compression formant chaque élément initiateur de ruine.

L'application d'un tel effort parasite 96 conjointement à l'effort de compression 98 appliqué aux extrémités 54 et 56 de chaque entretoise principale 50a, 50b et résultant de l'impact 92, favorise une ruine précoce de chaque entretoise principale 50a, 50b par flambage.

La ruine précoce des entretoises principales 50a, 50b permet de limiter le niveau d'efforts transmis à la structure de plancher inférieur 16 et plus généralement à la seconde portion 38 de la structure primaire 40. Cela permet de réduire la capacité de tenue structurale requise en ce qui concerne les éléments formant cette seconde portion 38, et cela permet en outre de retarder l'écrasement de cette seconde portion 38 et donc de maximiser l'absorption d'énergie produite par l'écrasement de la première portion 36 de la structure primaire 40.

Il est à noter que la déformation plastique des entretoises principales 50a, 50b et secondaires 52a, 52b contribue à cette absorption d'énergie.

Par ailleurs, la déformation plastique progressive du secteur angulaire métallique 80 de chaque cadre circonférentiel 42a du premier type entraîne une ruine progressive des cadres circonférentiels 42b du second type en matériau composite. Une telle ruine progressive permet une absorption d'énergie par ces cadres circonférentiels 42b du second type d'une manière bien plus efficace que la ruine explosive observée en ce qui concerne les cadres circonférentiels en matériau composite dans les structures primaires de fuselage de type connu.

Bien entendu, l'utilisation de cadres circonférentiels du second type, c'est-à-dire intégralement réalisés en matériau composite, en alternance avec des cadres circonférentiels du premier type, permet un gain de masse considérable.

La structure mixte des cadres circonférentiels du premier type permet également un gain de masse par rapport aux cadres circonférentiels intégralement réalisés en métal qui équipent les structures primaires de fuselage de type connu.

En variante, les entretoises secondaires 52a et 52b peuvent également être reliées à des éléments initiateurs de ruine du type décrit ci-dessus.

De plus, la figure 3 montre que chaque cadre circonférentiel est relié à des entretoises 50a, 50b, 52a, 52b supportant la structure de plancher inférieur 16. Il est toutefois possible sans sortir du cadre de l'invention, que seuls certains des cadres circonférentiels soient reliés à de telles entretoises. Ces cadres circonférentiels sont alors de préférence, mais pas nécessairement, du type à dissipation d'énergie. Dans tous les cas, le secteur angulaire métallique 80 de chaque cadre circonférentiel à dissipation d'énergie est de préférence agencé de manière à être traversé par au moins une ligne virtuelle longitudinale 100 (figure 3) traversant l'extrémité inférieure 56 d'au moins l'une des entretoises précitées.

En variante encore, certains ou tous les cadres circonférentiels à dissipation d'énergie peuvent être intégralement réalisés en métal lorsque cela présente un intérêt.

Par ailleurs, les éléments initiateurs de ruine peuvent être réalisés en plusieurs pièces. En particulier, ces éléments peuvent comprendre une poutre de compression et une ou deux pièces destinées à l'assemblage de ladite poutre de compression sur l'entretoise correspondante et/ou sur le cadre circonférentiel correspondant.

## Revendications

1. Structure primaire de fuselage (40) pour aéronef, comprenant :
- une pluralité de cadres circonférentiels (42a, 42b) ;
- une première structure de plancher (16) présentant des extrémités latérales (48) opposées raccordées auxdits cadres circonférentiels ; et
- au moins une entretoise (50a, 50b) pour supporter ladite première structure de plancher (16), ladite entretoise comprenant une extrémité inférieure (56) fixée sur un cadre circonférentiel de ladite pluralité de cadres circonférentiels ainsi qu'une extrémité supérieure (54) opposée fixée sur ladite première structure de plancher,
ladite structure primaire de fuselage étant **caractérisée en ce qu'**elle comprend au moins un élément initiateur de ruine (58a, 58b) comprenant des premiers moyens de fixation (78) par lesquels l'élément initiateur de ruine est fixé sur un cadre circonférentiel (42a, 42b) de ladite pluralité de cadres circonférentiels, à distance de l'extrémité inférieure (56) de ladite entretoise, ainsi que des seconds moyens de fixation (79) par lesquels l'élément initiateur de ruine est fixé sur ladite entretoise (50a, 50b), à distance des extrémités (54, 56) de ladite entretoise, de sorte que l'élément initiateur de ruine (58a, 58b) applique à ladite entretoise (50a, 50b) un effort latéral (96) sous l'effet d'un effort d'impact (92) orienté sensiblement selon la direction radiale et vers l'intérieur par rapport à un axe longitudinal (51) de la structure primaire de fuselage, de manière à favoriser une ruine précoce par flambage de l'entretoise soumise à un effort de compression (98) résultant dudit effort d'impact (92).

2. Structure primaire de fuselage selon la revendication 1, dans laquelle lesdits seconds moyens de fixation (79) dudit élément initiateur de ruine (58a, 58b) sont écartés de chaque extrémité (54, 56) de ladite entretoise (50a, 50b) d'une distance (*d1, d2*) supérieure ou égale à 25% d'une longueur totale (*L*) de ladite entretoise.

3. Structure primaire de fuselage selon la revendication 1 ou 2, dans laquelle ledit élément initiateur de ruine (58, 58b) comprend une poutre de compression présentant deux extrémités opposées (68, 70) au niveau desquelles sont respectivement agencés lesdits premiers et seconds moyens de fixation (78, 79).

4. Structure primaire de fuselage selon la revendication 3, dans laquelle ladite poutre de compression dudit élément initiateur de ruine (58a, 58b) s'étend selon une direction (D1) faisant un angle (α) compris entre 45 degrés et 145 degrés avec une direction longitudinale (D2) de ladite entretoise (50a, 50b).

5. Structure primaire de fuselage selon la revendication 3 ou 4, dans laquelle ladite entretoise (50a, 50b) et ladite poutre de compression dudit élément initiateur de ruine (58a, 58b) s'étendent orthogonalement à une direction longitudinale (X) de ladite structure primaire (40).

6. Structure primaire de fuselage selon l'une quelconque des revendications 1 à 5, dans laquelle ladite pluralité de cadres circonférentiels comprend au moins un cadre circonférentiel (42a) à dissipation d'énergie comportant au moins un secteur angulaire (80) réalisé en un matériau métallique, et s'étendant circonférentiellement de part et d'autre d'une ligne virtuelle longitudinale (100) traversant ladite extrémité inférieure (56) de ladite entretoise (50a, 50b).

7. Structure primaire de fuselage selon la revendication 6, dans laquelle ledit secteur angulaire en matériau métallique (80) s'étend de part et d'autre d'un plan vertical (V) passant par un axe longitudinal (51) de la structure primaire (40).

8. Structure primaire de fuselage selon la revendication 7, dans laquelle ladite première structure de plancher est une structure de plancher inférieur (16), ladite structure primaire (40) comprenant en outre :
- une structure de plancher principal (22) disposée au-dessus de ladite structure de plancher inférieur (16) et présentant des extrémités latérales opposées (47) raccordées à ladite pluralité de cadres circonférentiels (42a, 42b), et
- au moins deux entretoises (24) présentant des extrémités inférieures respectives (87) agencées de part et d'autre dudit plan vertical (V) et fixées sur ledit secteur angulaire en matériau métallique (80) dudit cadre circonférentiel à dissipation d'énergie (42a), ainsi que des extrémités supérieures respectives opposées fixées sur ladite structure de plancher principal (22), de manière à supporter cette dernière.

9. Structure primaire de fuselage selon l'une quelconque des revendications 6 à 8, dans laquelle ledit cadre circonférentiel à dissipation d'énergie (42a) comprend en outre au moins un secteur angulaire (82) réalisé en un matériau composite comprenant des fibres de renfort noyées dans une matrice de résine durcie.

10. Structure primaire de fuselage selon l'une quelconque des revendications 6 à 9, dans laquelle ladite pluralité de cadres circonférentiels comprend en outre au moins un cadre circonférentiel (42b) intégralement réalisé en matériau composite.

11. Structure primaire de fuselage selon l'une quelconque des revendications 1 à 10, comprenant une pluralité d'entretoises (50a, 50b, 52a, 52b) présentant une extrémité inférieure (56) fixée sur un cadre circonférentiel (42a, 42b) de ladite pluralité de cadres circonférentiels ainsi qu'une extrémité supérieure opposée (54) fixée sur ladite première structure de plancher (16), de manière à supporter cette dernière, et dans laquelle ladite pluralité d'entretoises comprend au moins une paire d'entretoises principales (50a, 50b) dont les extrémités inférieures respectives (56) sont fixées sur un même cadre circonférentiel (42a, 42b) et dont les extrémités supérieures respectives (54) sont fixées sur ladite première structure de plancher (16), lesdites entretoises principales (50a, 50b) étant agencées symétriquement de part et d'autre d'un plan vertical (V) passant par un axe longitudinal (51) de la structure primaire (40), ladite structure primaire comprenant au moins deux éléments initiateurs de ruine (58a, 58b) dont lesdits premiers moyens de fixation (78) sont fixés sur une portion (81) dudit cadre circonférentiel s'étendant entre lesdites extrémités inférieures (56) desdites entretoises principales, et dont lesdits seconds moyens de fixation (79) sont respectivement fixés auxdites entretoises principales, à distance des extrémités de ces dernières.

12. Structure primaire de fuselage selon la revendication 11, dans laquelle l'écartement angulaire (θ) entre ledit plan vertical (V) et lesdits premiers moyens de fixation (78) de chacun des deux éléments initiateurs de ruine (58a, 58b) respectivement associés auxdites entretoises principales (50a, 50b), mesuré à partir dudit axe longitudinal (51) de ladite structure primaire (40), est inférieur à 10 degrés.

13. Structure primaire de fuselage selon la revendication 11 ou 12, dans laquelle ladite pluralité d'entretoises supportant ladite première structure de plancher (16) comprend en outre une paire d'entretoises secondaires (52a, 52b) agencées latéralement de part et d'autre de l'ensemble formé par ladite paire d'entretoises principales (50a, 50b) et fixées sur le même cadre circonférentiel (42a, 42b) que ces dernières.

14. Tronçon de fuselage pour aéronef, **caractérisé en ce qu'il** comprend une structure primaire de fuselage (40) selon l'une quelconque des revendications précédentes.

15. Aéronef, **caractérisé en ce qu'**il comprend au moins un tronçon de fuselage selon la revendication précédente et/ou une structure primaire de fuselage (40) selon l'une quelconque des revendications 1 à 13.

## Patentansprüche

1. Primäre Rumpfstruktur (40) für ein Luftfahrzeug, umfassend:
- eine Vielzahl von Umfangsrahmen (42a, 42b);
- eine erste Bodenstruktur (16), die gegenüberliegende seitliche Enden (48) aufweist, die mit den Umfangsrahmen verbunden sind; und
- wenigstens einen Steg (50a, 50b) zum Tragen der ersten Bodenstruktur (16), wobei der Steg Folgendes umfasst: ein unteres Ende (56), das an einem Umfangsrahmen der Vielzahl von Umfangsrahmen befestigt ist, und ein gegenüberliegendes oberes Ende (54), das an der ersten Bodenstruktur befestigt ist,
wobei die primäre Rumpfstruktur **dadurch gekennzeichnet ist, dass** sie wenigstens ein Zusammenbrucheinleitungselement (58a, 58b) aufweist, das Folgendes umfasst: erste Befestigungsmittel (78), durch die das Zusammenbrucheinleitungselement in einem Abstand vom unteren Ende (56) des Stegs an einem Umfangsrahmen (42a, 42b) der Vielzahl von Umfangsrahmen befestigt ist, und zweite Befestigungsmittel (79), durch die das Zusammenbrucheinleitungselement in einem Abstand von den Enden (54, 56) des Stegs an dem Steg (50a, 50b) befestigt ist, so dass das Zusammenbrucheinleitungselement (58a, 58b) auf den Steg (50a, 50b) unter der Einwirkung einer Prallbeanspruchung (92) eine seitliche Kraft (96) ausübt, die in Bezug auf eine Längsachse (51) der primären Rumpfstruktur im Wesentlichen radial und nach innen ausgerichtet ist, um einen frühzeitigen Zusammenbruch durch Knicken des Stegs zu begünstigen, der einer Kompressionskraft (98) ausgesetzt ist, die von der Prallbeanspruchung (92) herrührt.

2. Primäre Rumpfstruktur nach Anspruch 1, wobei die zweiten Befestigungsmittel (79) des Zusammenbrucheinleitungselements (58a, 58b) von jedem Ende (54, 56) des Stegs (50a, 50b) mit einem Abstand (*d1, d2*) beabstandet sind, der größer oder gleich 25 % einer Gesamtlänge (L) des Stegs ist.

3. Primäre Rumpfstruktur nach Anspruch 1 oder 2, wobei das Zusammenbrucheinleitungselement (58, 58b) einen Kompressionsbalken umfasst, der zwei entgegengesetzte Enden (68, 70) aufweist, in deren Bereich jeweils die ersten und zweiten Befestigungsmittel (78, 79) angeordnet sind.

4. Primäre Rumpfstruktur nach Anspruch 3, wobei sich der Kompressionsbalken des Zusammenbrucheinleitungselements (58a, 58b) in einer Richtung (D1) erstreckt, die einen Winkel (α) zwischen 45 Grad und 145 Grad zu einer Längsrichtung (D2) des Stegs (50a, 50b) bildet.

5. Primäre Rumpfstruktur nach Anspruch 3 oder 4, wobei sich der Steg (50a, 50b) und der Kompressionsbalken des Zusammenbrucheinleitungselements (58a, 58b) im rechten Winkel zu einer Längsrichtung (X) der primären Struktur (40) erstrecken.

6. Primäre Rumpfstruktur nach einem der Ansprüche 1 bis 5, wobei die Vielzahl von Umfangsrahmen wenigstens einen energiedissipativen Umfangsrahmen (42a) umfasst, der wenigstens einen Winkelabschnitt (80) aus einem metallischen Material aufweist und sich in Umfangsrichtung zu beiden Seiten einer virtuellen Längslinie (100) erstreckt, die durch das untere Ende (56) des Stegs (50a, 50b) verläuft.

7. Primäre Rumpfstruktur nach Anspruch 6, wobei sich der Winkelabschnitt aus einem metallischen Material (80) zu beiden Seiten einer vertikalen Ebene (V) erstreckt, die durch eine Längsachse (51) der primären Struktur (40) verläuft.

8. Primäre Rumpfstruktur nach Anspruch 7, wobei die erste Bodenstruktur eine untere Bodenstruktur (16) ist, wobei die primäre Struktur (40) ferner Folgendes umfasst:
- eine Hauptbodenstruktur (22), die über der unteren Bodenstruktur (16) angeordnet ist und gegenüberliegende seitliche Enden (47) aufweist, die mit der Vielzahl von Umfangsrahmen (42a, 42b) verbunden sind, und
- wenigstens zwei Stege (24), die Folgendes umfassen: jeweilige untere Enden (87), die zu beiden Seiten der vertikalen Ebene (V) angeordnet sind und an dem Winkelabschnitt aus metallischem Material (80) des energiedissipativen Umfangsrahmens (42a) befestigt sind, und jeweilige gegenüberliegende obere Enden, die an der Hauptbodenstruktur (22) befestigt sind, um diese zu tragen.

9. Primäre Rumpfstruktur nach einem der Ansprüche 6 bis 8, wobei der energiedissipative Umfangsrahmen (42a) darüber hinaus wenigstens einen Winkelabschnitt (82) aus einem Verbundmaterial aufweist, das Verstärkungsfasern umfasst, die in eine Matrix aus gehärtetem Harz getaucht sind.

10. Primäre Rumpfstruktur nach einem der Ansprüche 6 bis 9, wobei die Vielzahl von Umfangsrahmen darüber hinaus wenigstens einen Umfangsrahmen (42b) umfasst, der zur Gänze aus einem Verbundmaterial hergestellt ist.

11. Primäre Rumpfstruktur nach einem der Ansprüche 1 bis 10, umfassend eine Vielzahl von Stegen (50a, 50b, 52a, 52b), die Folgendes aufweisen: ein unteres Ende (56), das an einem Umfangsrahmen (42a, 42b) der Vielzahl von Umfangsrahmen befestigt ist, und ein gegenüberliegendes oberes Ende (54), das an der ersten Bodenstruktur (16) befestigt ist, um diese zu tragen, und wobei die Vielzahl von Stegen wenigstens ein Paar Hauptstege (50a, 50b) umfasst, deren untere Enden (56) jeweils am gleichen Umfangsrahmen (42a, 42b) befestigt sind, und deren obere Enden (54) jeweils an der ersten Bodenstruktur (16) befestigt sind, wobei die Hauptstege (50a, 50b) symmetrisch zu beiden Seiten einer vertikalen Ebene (V) angeordnet sind, die durch eine Längsachse (51) der primären Struktur (40) verläuft, wobei die primäre Struktur wenigstens zwei Zusammenbrucheinleitungselemente (58a, 58b) umfasst, deren erste Befestigungsmittel (78) an einem Abschnitt (81) des Umfangsrahmens befestigt sind, der sich zwischen den unteren Enden (56) der Hauptstege erstreckt, und deren zweite Befestigungsmittel (79) jeweils an den Hauptstegen befestigt sind, und zwar in einem Abstand von den Enden der Letztgenannten.

12. Primäre Rumpfstruktur nach Anspruch 11, wobei der Winkelabstand (θ) zwischen der vertikalen Ebene (V) und den ersten Befestigungsmitteln (78) von jedem der zwei Zusammenbrucheinleitungselemente (58a, 58b), die jeweils mit den Hauptstegen (50a, 50b) verbunden sind, ausgehend von der Längsachse (51) der primären Struktur (40) gemessen, weniger als 10 Grad beträgt.

13. Primäre Rumpfstruktur nach Anspruch 11 oder 12, wobei die Vielzahl von Stegen, welche die erste Bodenstruktur (16) tragen, darüber hinaus ein Paar sekundärer Stege (52a, 52b) umfassen, die seitlich zu beiden Seiten der Einheit angeordnet sind, die durch das Paar von Hauptstegen (50a, 50b) gebildet wird, und die am gleichen Umfangsrahmen (42a, 42b) wie diese befestigt sind.

14. Rumpfteil für Luftfahrzeug, **dadurch gekennzeichnet, dass** er eine primäre Rumpfstruktur (40) nach einem der vorhergehenden Ansprüche umfasst.

15. Luftfahrzeug, **dadurch gekennzeichnet, dass** es wenigstens einen Rumpfteil nach dem vorhergehenden Anspruch und/oder eine primäre Rumpfstruktur (40) nach einem der Ansprüche 1 bis 13 umfasst.

## Claims

1. A primary fuselage structure (40) for an aircraft, including:
- a plurality of circumferential frames (42a, 42b);
- a first floor structure (16) exhibiting opposite lateral ends (48) connected to said circumferential frames; and
- at least one strut (50a, 50b) for supporting said first floor structure (16), said strut including a lower end (56) fixed on a circumferential frame of said plurality of circumferential frames and an opposite upper end (54) fixed on said first floor structure, said primary fuselage structure being **characterized in that** it includes at least one failure-initiating element (58a, 58b) incuding first fastening means (78) by which the failure-initiating element is fixed on a circumferential frame (42a, 42b) of said plurality of circumferential frames, away from the lower end (56) of said strut, as well as second fastening means (79) by which the failure-initiating element is fixed on said strut (50a, 50b), away from the ends (54, 56) of said strut, so that the failure-initiating element (58a, 58b) applies to said strut (50a, 50b) a lateral force (96) under the influence of an impact force (92) oriented substantially in the radial direction and inward relative to a longitudinal axis (51) of the primary fuselage structure, so as to contribute to premature failure in buckling of the strut subjected to a compression (98) resulting from said impact force (92).

2. The primary fuselage structure according to Claim 1, wherein said second fastening means (79) of said failure-initiating element (58a, 58b) are separated from each end (54, 56) of said strut (50a, 50b) by a distance (*d1, d2*) greater than or equal to 25% of a total length (*L*) of said strut.

3. The primary fuselage structure according to Claim 1 or 2, wherein said failure-initiating element (58a, 58b) includes a compression beam exhibiting two opposite ends (68, 70) at which are respectively positioned said first and second fastening means (78, 79).

4. The primary fuselage structure according to Claim 3, wherein said compression beam of said failure-initiating element (58a, 58b) extends in a direction (D1) forming an angle (α) comprised between 45 degrees and 145 degrees with a longitudinal direction (D2) of said strut (50a, 50b).

5. The primary fuselage structure according to Claim 3 or 4, wherein said strut (50a, 50b) and said compression beam of said failure-initiating element (58a, 58b) extend perpendicularly to a longitudinal direction (X) of said primary structure (40).

6. The primary fuselage structure according to any one of Claims 1 through 5, wherein said plurality of circumferential frames includes at least one energy-dissipating circumferential frame (42a) comprising at least one angular sector (80) made of a metallic material, and extending circumferentially to either side of a virtual longitudinal line (100) passing through said lower end (56) of said strut (50a, 50b).

7. The primary fuselage structure according to Claim 6, wherein said angular sector made of a metallic material (80) extends to either side of a vertical plane (V) passing through a longitudinal axis (51) of the primary structure (40).

8. The primary fuselage structure according to Claim 7, wherein said primary floor structure is a lower floor structure (16), said primary structure (40) also including:
- a main floor structure (22) located above said lower floor structure (16) and exhibiting opposite lateral ends (47) connected to said plurality of circumferential frames (42a, 42b), and
- at least two struts (24) exhibiting respective lower ends (87) positioned on either side of said vertical plane (V) and fixed on said angular sector made of metallic material (80) of said energy-dissipating circumferential frame (42a), as well as respective opposite upper ends fixed on said main floor structure (22), so as to support it.

9. The primary fuselage structure according to any one of Claims 6 to 8, wherein said energy-dissipating circumferential frame (42a) also comprises at least one angular sector (82) made of a composite material consisting of reinforcing fibers embedded in a matrix of hardened resin.

10. The primary fuselage structure according to any one of Claims 6 to 9, wherein said plurality of circumferential frames also includes at least one circumferential frame (42b) made entirely of composite material.

11. The primary fuselage structure according to any one of Claims 1 to 10, including a plurality of struts (50a, 50b, 52a, 52b) exhibiting a lower end (56) fixed on a circumferential frame (42a, 42b) of said plurality of circumferential frames, as well as an opposite upper end (54) fixed on said primary floor structure (16) so as to support it, and wherein said plurality of struts includes at least one pair of main struts (50a, 50b) the respective lower ends (56) whereof are fixed on one and the same circumferential frame (42a, 42b) and the respective upper ends (54) whereof are fixed on said first floor structure (16), said main struts (50a, 50b) being positioned symmetrically on either side of a vertical plane (V) running through a longitudinal axis (51) of the primary structure (40), said primary structure including at least two failure-initiating elements (58a, 58b) the first fastening means (78) whereof are fixed on a portion (81) of said circumferential frame extending between said lower ends (56) of said main struts, and the second fastening means (79) whereof are respectively fixed to said main struts, away from their ends.

12. The primary fuselage structure according to Claim 11, wherein the angular separation (θ) between said vertical plane (V) and said first fastening means (78) of each of the two failure-initiating elements (58a, 58b) respectively associated with said main struts (50a, 50b), measured from said longitudinal axis (51) of said primary structure (40), is less than 10 degrees.

13. The primary fuselage structure according to Claim 11 or 12, wherein said plurality of struts supporting said first floor structure (16) also includes a pair of secondary struts (52a, 52b) positioned laterally on either side of the assembly constituted by said pair of main struts (50a, 50b) and fixed on the same circumferential frame (42a, 42b) as the last mentioned.

14. A fuselage segment for an aircraft, **characterized in that** it includes a primary fuselage structure (40) according to any one of the foregoing claims.

15. An aircraft, **characterized in that** it comprises at least one fuselage segment according to the foregoing claim and/or a primary fuselage structure (40) according to any one of Claims 1 to 13.
